# DEMANDE DE BREVET EUROPEEN

(11) **EP 1 158 275 A1**
(43) Date de publication de la demande: **28.11.2001**
(21) Numéro de dépôt: 01401194.4
(22) Date de dépôt: 10.05.2001
(51) Int. Cl.: G01D 5/14, F01L 9/04

(54) **Capteur de position axiale**

(30) Priorité: 23.05.2000 FR 0006563
(71) Demandeur: SAGEM SA, 75016 Paris (FR)
(72) Inventeur: Porcher, Yves, Le Plessis-Bouchard (FR); Pradel, Denis, 95480 Pierrelaye (FR)
(74) Mandataire: Gorrée, Jean-Michel

(57) **Abrégé**

Capteur de position axiale pour une tige (1) déplaçable axialement entre deux positions extrêmes, comprenant : un manchon magnétique (4) à aimantation radiale, fixé coaxialement sur la tige (1) qui est au moins superficiellement magnétique ; un détecteur fixe de flux magnétique (5) comprenant : deux bagues (6A, 6B) ferromagnétiques entourant coaxialement, à distance radiale (e), le manchon aimanté (4) et écartées axialement l'une de l'autre, ces deux bagues comportant, à leurs extrémités respectives en vis-à-vis, deux saillies radiales (7A, 7B) respectives sur lesquelles sont appliquées deux sondes de Hall (8A, 8B) associées fonctionnellement à des moyens de calcul (9) fournissant un signal représentatif du rapport de la différence à la somme des flux magnétiques passant par les sondes, ce rapport étant représentatif de la position axiale de la tige (1) ; et des moyens (18) de retour des flux magnétiques.

## Description

La présente invention concerne des perfectionnements apportés aux capteurs de position axiale pour une tige déplaçable axialement entre deux positions extrêmes, ledit capteur comprenant un organe aimanté solidaire de la tige et un détecteur de flux magnétique disposé fixe en regard de la trajectoire de l'organe aimanté, et elle concerne également, à titre d'application préférée bien que non exclusive, un actionneur électromagnétique de soupape de moteur à combustion interne équipé d'un tel capteur.

Il existe, dans la technique, un besoin de connaître la position instantanée d'une tige animée d'un mouvement axial, notamment d'un mouvement axial alternatif de part et d'autre d'une position initiale ou position de repos (ou position neutre).

C'est le cas notamment pour les moteurs à combustion interne dans lesquels les soupapes sont animées individuellement par un actionneur électromagnétique. Pour assurer une condition optimale de fonctionnement du moteur, il s'avère intéressant de connaître en permanence la position exacte de chaque soupape par rapport à une référence fixe. Il est souhaitable, en particulier, afin de réduire les chocs mécaniques générateurs de bruits, d'usure et de défaillances mécaniques, de contrôler la venue en douceur de la tête de soupape au contact de son siège et de la palette d'actionneur (dont est solidaire la tige d'actionneur) au contact de ses butées de limitation de course.

L'invention a pour but de proposer un capteur de position axiale pour une tige mobile axialement qui permette de déterminer la position axiale de la tige avec une grande précision et qui, en particulier pour l'application préférée aux actionneurs électromagnétiques de soupapes de moteur à combustion interne, permette de satisfaire les exigences de la pratique.

A ces fins, un capteur de position axiale de tige mobile axialement tel que mentionné au préambule se caractérise, étant agencé conformément à l'invention, en ce que
- l'organe aimanté est un manchon en matériau magnétique à aimantation radiale, qui est fixé sur la tige coaxialement à celle-ci,
- la tige est, au moins superficiellement, constituée en matériau magnétique,
- le détecteur de flux magnétique comprend :
   - deux bagues en matériau ferromagnétique, entourant coaxialement, à distance radiale, le manchon aimanté et écartées axialement l'une de l'autre,
   - ces deux bagues comportant, à leurs extrémités respectives en vis-à-vis, deux saillies radiales respectives,
   - deux sondes de Hall appliquées en vis-à-vis respectivement sur lesdites deux saillies, et
   - des moyens de calcul associés fonctionnellement auxdites sondes de Hall et propres à fournir un signal de sortie représentatif du rapport de la différence des flux magnétiques à la somme des flux magnétiques passant par lesdites sondes, lequel rapport est lui-même représentatif de la position axiale de la tige par rapport à une position de repos ; et
- des moyens de retour des flux magnétiques.

Le traitement des informations de flux magnétique A et B traversant respectivement les deux sondes de Hall avec évaluation de la grandeur (A-B)/(A+B) permet de déterminer sans ambiguïté et de façon précise la position de la tige par rapport à une position de référence ou position de repos (position neutre).

Un tel agencement permet d'évaluer la position instantanée de la tige avec une bonne fiabilité eu égard à des vitesses de déplacement élevées que peut subir la tige mobile, par exemple lorsqu'il s'agit d'une soupape de moteur.

Enfin, l'agencement conforme à l'invention peut être réalisé sous une forme extrêmement compacte, aussi bien en longueur (c'est-à-dire axialement) qu'en diamètre (c'est-à-dire radialement). Il peut alors trouver place sur une tige autour de laquelle la place disponible est peu importante, comme c'est le cas autour de la tige d'une soupape de moteur à combustion interne.

Dans un exemple de réalisation possible, les moyens de calcul comprennent un circuit intégré monté sur une plaquette à circuits imprimés qui chevauche les deux sondes de Hall. Dans un exemple de réalisation préféré, les moyens de calcul sont inclus dans un circuit intégré spécifique du type ASIC intégrant également les deux sondes de Hall, ledit circuit intégré spécifique pouvant être en appui directement sur les deux saillies radiales : le composant ainsi constitué est d'un moindre coût, ses performances sont meilleures, les deux sondes de Hall sont alors appariées, et la connectique est plus simple à réaliser.

Dans un mode de réalisation préféré, les deux saillies radiales respectives des deux bagues ont une étendue angulaire restreinte et se présentent sous forme de plots radiaux en vis-à-vis sur lesquels sont disposées respectivement les sondes de Hall ; un tel agencement présente l'avantage de concentrer le flux magnétique au niveau des plots, ce qui renforce l'efficacité du capteur.

Avantageusement, les bagues sont entourées et supportées par un boîtier cylindrique en matériau amagnétique sensiblement coaxial à la tige et ce boîtier présente une ouverture latérale dans laquelle s'engagent lesdites saillies radiales des deux bagues. L'ensemble du dispositif se trouve ainsi abrité et protégé vis-à-vis d'un environnement qui peut se révéler particulièrement agressif.

Dans un mode de réalisation simple, au moins une extrémité du boîtier en matériau amagnétique est conformée pour entourer étroitement la tige et constituer un palier de support de celle-ci à libre coulissement.

De même, de façon simple évitant le recours à d'autres moyens d'assemblage, les susdits moyens de retour des flux magnétiques comprennent un tube cylindrique en matériau ferromagnétique entourant étroitement ledit boîtier, tout en serrant les moyens de calcul sur les sondes de Hall et ces dernières respectivement sur les deux saillies des bagues.

Il est intéressant que la face externe du boîtier soit creusée d'une gouttière s'étendant à partir de ladite ouverture latérale et que des fils électriques de liaison raccordés auxdits moyens de calcul soient abrités dans cette gouttière : de ce fait, les conducteurs électriques nécessaires au fonctionnement du capteur sont protégés au moins en partie et l'on diminue ainsi le risque d'un arrachement ou d'une détérioration accidentelle ; de plus, ces conducteurs se trouvent, au moins en partie, mécaniquement bloqués et l'on évite une détérioration de leur raccordement avec la disposition sous l'effet de vibrations ambiantes, notamment dans le cas d'une utilisation en association avec une soupape de moteur.

Le capteur conforme à l'invention peut trouver une application notamment pour détecter la position instantanée d'une tige animée d'un mouvement alternatif axial, de part et d'autre d'une position de repos ou position neutre.

Selon un second de ses aspects, l'invention vise à perfectionner un actionneur électromagnétique de soupape dans un moteur à combustion interne, cet actionneur ayant une palette en matériau ferromagnétique solidaire d'une tige d'actionneur mobile sensiblement axialement pour coopérer avec une queue de soupape située sensiblement dans son prolongement et coaxialement à celle-ci et qui est mobile sensiblement axialement, des moyens de rappel élastique étant associés respectivement à la tige d'actionneur et à la queue de soupape pour maintenir au repos ladite soupape dans une position médiane entre des positions d'ouverture complète et de fermeture, lequel actionneur, étant agencé conformément à l'invention, se caractérise en ce qu'il comporte au moins un capteur de position tel que défini ci-dessus qui est associé fonctionnellement à l'un des organes déplaçables axialement choisi parmi la tige d'actionneur ou la queue de soupape.

L'invention sera mieux comprise à la lecture de la description détaillée qui suit de certains modes de réalisation de l'invention donnés uniquement à titre d'exemples non limitatifs. Dans cette description, on se réfère aux dessins annexés sur lesquels :
- la figure 1 est une vue en coupe d'un mode de réalisation possible d'un capteur de position agencé conformément à l'invention ;
- la figure 2 est une vue schématique de dessous en perspective d'un composant du capteur de la figure 1 ;
- la figure 3 est une vue en coupe d'une variante du capteur de la figure 1, qui constitue un mode de réalisation préféré dudit capteur de position ; et
- la figure 4 est une vue en coupe d'un mode de réalisation d'un actionneur électromagnétique de soupape d'un moteur à combustion interne qui est équipé d'un capteur de position instantanée de la soupape conforme à l'invention.

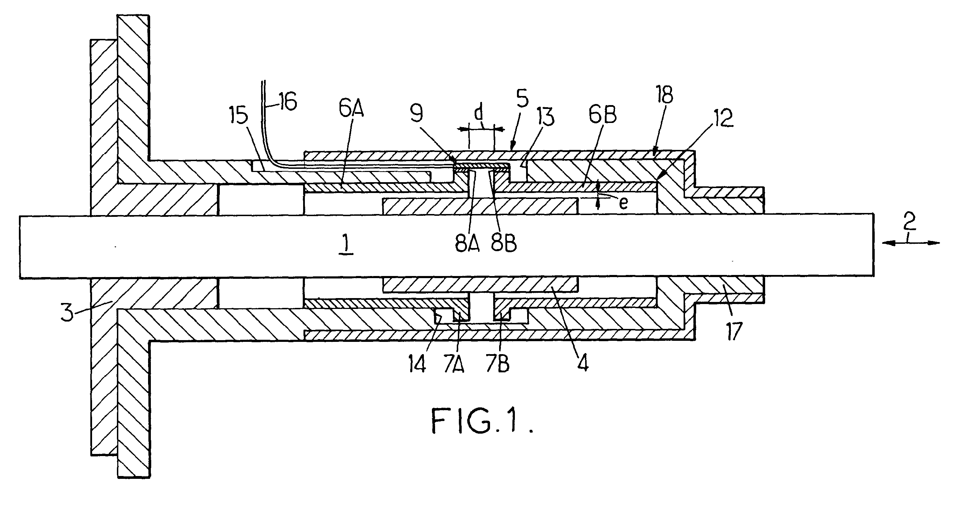

En se reportant tout d'abord à la figure 1, il y est montré une tige 1 qui est déplaçable axialement entre deux positions extrêmes (double flèche 2) ; il peut s'agir notamment, bien que non exclusivement, d'un mouvement alternatif axial de part et d'autre d'une position neutre ou position de repos. La tige 1 peut être supportée et guidée dans son mouvement par au moins un palier fixe 3. Les moyens d'entraînement de la tige 1, qui n'entrent pas dans le cadre général de la présente invention, ne sont pas montrés et peuvent être quelconques.

Pour détecter la position instantanée de la tige 1, on a recours à des moyens magnétiques agencés de la façon suivante.

Sur la tige 1 est fixé un organe aimanté constitué sous forme d'un manchon 4 en matériau magnétique à aimantation radiale, ledit manchon 4 étant sensiblement coaxial à la tige 1.

La tige 1 elle-même est, au moins en partie - c'est-à-dire au moins superficiellement - ou en totalité, constituée en matériau magnétique, de façon à constituer une partie d'un chemin magnétique pour le flux magnétique de l'aimant 4.

La tige 1 et l'aimant 4 constituent à eux deux (pour la partie intéressant l'invention) un équipage mobile. En regard de celui-ci est disposé de façon fixe un détecteur de flux magnétique désigné dans son ensemble par la référence 5 et comprenant :
- deux bagues 6A et 6B en matériau ferromagnétique, qui sont disposées l'une à la suite de l'autre en étant axialement écartées l'une de l'autre (intervalle d) et qui sont coaxiales à la tige 1 et au manchon aimanté 4 en restant radialement écartées de ce dernier en formant avec celui-ci un entrefer (e) ; dans la position neutre ou position de repos de la tige 1 illustrée à la figure 1, l'intervalle d entre les deux bagues ferromagnétiques 6A, 6B est positionné sensiblement en regard du milieu du manchon 4 ;
- les deux bagues 6A, 6B se terminent, à leurs extrémités respectivement en vis-à-vis, par deux saillies radiales respectives 7A, 7B qui, ici, se présentent sous forme annulaire ;
- deux sondes de Hall 8A, 8B sont disposées en vis-à-vis respectivement sur les saillies 7A, 7B ;
- des moyens de calcul 9 associés aux deux sondes de Hall et propres à fournir un signal électrique de sortie qui est représentatif du rapport de la différence des flux magnétiques H_{A}, H_{B} à la somme des flux magnétiques H_{A}, H_{B} passant par lesdites sondes de Hall 8A, 8B - c'est-à-dire de la grandeur (H_{A}-H_{B})/(H_{A}+H_{B}) -, laquelle grandeur est elle-même représentative de la position axiale de la tige 1 par rapport à une position de repos ; et
- des moyens de retour des flux magnétiques ayant traversé les deux sondes de Hall.

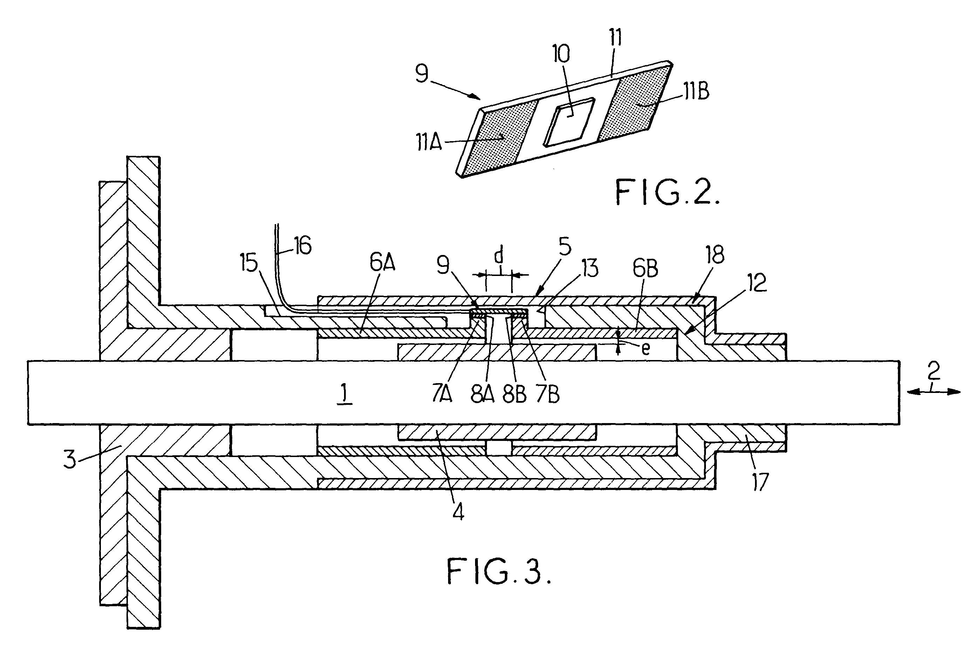

Comme illustré à la figure 1 et comme on le voit mieux à la figure 2 faite à plus grande échelle, on peut prévoir que les moyens de calcul 9 soient agencés sous forme d'un circuit intégré 10 (par exemple du type "Application Specific Integrated Circuit" ASIC) qui est fixé sur une plaquette 11 à circuits imprimés dont les extrémités 11A, 11B sont propres à être en appui sur les deux sondes de Hall 8A, 8B. De préférence, on peut également réaliser un circuit intégré de type ASIC qui intègre à la fois les moyens de calcul et les deux sondes de Hall et qui soit dimensionné de manière à reposer directement, par ses extrémités, sur les deux saillies respectives 7A et 7B, ce circuit pouvant être associé à un circuit imprimé souple ou rigide pour assurer les liaisons nécessaires (non représenté).

Les deux bagues 6A et 6B sont retenues par un boîtier 12 de forme générale sensiblement cylindrique qui les entoure et qui est constitué en matériau amagnétique. Le boîtier 12, sensiblement coaxial à la tige 1, présente une ouverture latérale 13 et/ou un décrochement annulaire 14 pour recevoir les saillies 7A, 7B des bagues 6A, 6B ainsi que les sondes 8A, 8B et les moyens de calcul 9. Au voisinage desdits moyens de calcul 9, la face externe du boîtier 12 peut être munie d'une gorge 15 dans laquelle sont encastrés des fils électriques 16 reliant les moyens de calcul 9 à des moyens de traitement du signal situés à l'extérieur du dispositif et non montrés.

Le boîtier 12 peut, au moins à son extrémité opposée au palier 3 précité, être conformé avec un diamètre réduit de manière à entourer étroitement la tige 1 et constituer ainsi un palier 17 de support de ladite tige à libre coulissement.

A son autre extrémité, le boîtier 12 peut également présenter un diamètre réduit pour entourer étroitement la tige 1, ou bien être directement solidarisé à la structure fixe comme illustré à la figure 1.

Les moyens de retour des flux magnétiques ayant traversé les deux sondes de Hall 8A, 8B peuvent être constitués sous forme d'un tube cylindrique 18 en matériau ferromagnétique entourant ledit boîtier 12, y compris la partie 17 de diamètre réduit de celui-ci. Au droit de l'ouverture latérale 13, le tube 18 coopère avec les moyens de calcul 9 (en l'occurrence la plaquette à circuits imprimés 11) et les bloque radialement en appuyant les sondes de Hall 8A, 8B sur les saillies 7A, 7B respectives.

On constitue ainsi deux circuits de flux magnétiques traversant respectivement les deux saillies radiales 7A, 7B et les deux sondes de Hall 8A, 8B fixées respectivement sur celles-ci. Une fois déterminées les valeurs des flux magnétiques H_{A} et H_{B} traversant lesdites sondes 8A, 8B lorsque la tige 1 est dans sa position de repos illustrée à la figure 1 (en particulier les deux flux H_{A} et H_{B} pouvant alors être sensiblement égaux), tout déplacement de la tige dans un sens ou dans l'autre modifie les valeurs des flux H_{A} et H_{B} qui varient dans des sens inverses. L'élaboration des grandeurs différence H_{A}-H_{B} et somme H_{A}+H_{B} et l'élaboration du rapport de ces deux grandeurs permet d'éliminer des influences perturbatrices et d'obtenir un signal électrique de sortie qui soit une représentation fiable de la position de la tige par rapport à sa position de repos.

On peut améliorer le rendement magnétique du dispositif en donnant aux saillies 7A, 7B une forme particulière. Comme illustré à la figure 3, les saillies radiales 7A, 7B ne sont plus de forme annulaire, mais ont une étendue angulaire réduite et se présentent alors sous forme de deux plots radiaux en vis-à-vis. La surface de ces plots 7A, 7B est propre à recevoir les deux sondes de Hall 8A, 8B respectives. Grâce à cet agencement, on provoque une concentration des deux flux magnétiques dans les plots 7A, 7B et donc dans les sondes 8A, 8B, et on accroît considérablement la sensibilité du capteur.

On notera que, dans le mode de réalisation préféré de la figure 3, le boîtier 12 ne présente que la seule ouverture latérale 13 livrant passage aux plots 7A, 7B, tandis que le décrochement annulaire 14 du mode de réalisation de la figure 1 n'existe plus.

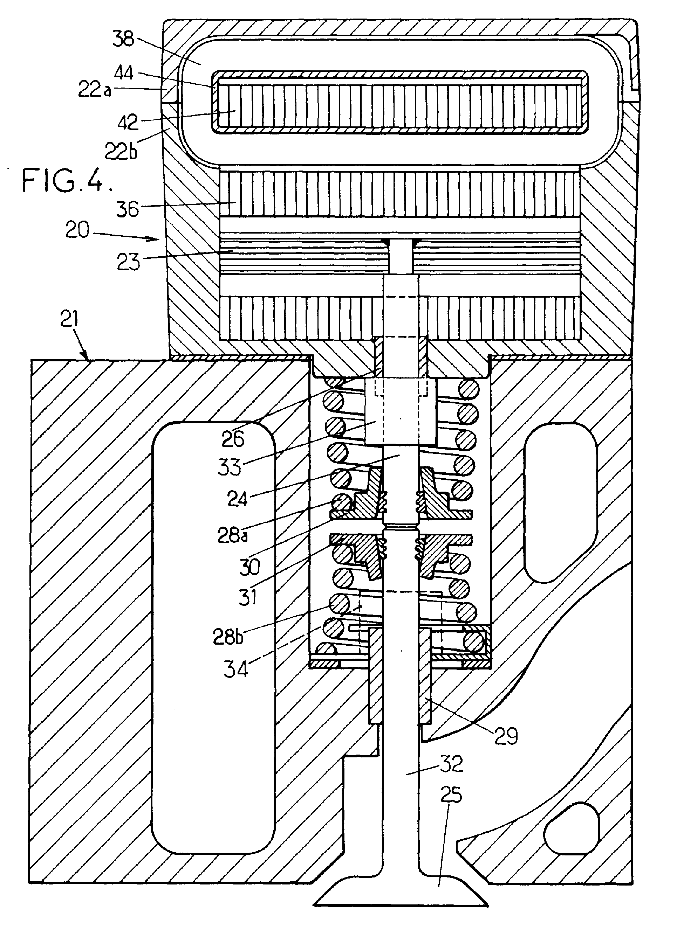

Un capteur magnétique de position conforme à l'invention peut trouver une application particulièrement intéressante, bien que non exclusive, pour détecter la position instantanée d'une soupape d'un moteur à combustion interne, laquelle soupape étant commandée par un actionneur électromagnétique. De tels actionneurs électromagnétiques sont décrits et représentés par exemple dans les documents FR 2 784 222 et FR 99 05203. Un exemple en est illustré à la figure 4 des dessins annexés.

En bref, l'actionneur 20 est constitué d'un ensemble destiné à être monté sur la culasse 21 d'un moteur. Il peut comporter un boîtier constitué de plusieurs pièces 22a et 22b empilées et assemblées par des moyens non représentés, tels que des vis. Ces pièces sont en matériau non ferromagnétique, par exemple en alliage léger. Le boîtier peut être fixé sur la culasse 21 par l'intermédiaire d'une cale également en matériau non ferromagnétique.

L'actionneur comporte une palette 23 en matériau ferromagnétique, avantageusement feuilleté pour réduire les pertes, fixée sur une tige d'actionneur 24 destinée à l'entraînement de la soupape 25. En général, plusieurs soupapes sont montées côte à côte et on ne dispose que d'une largeur faible pour chaque actionneur dans la direction perpendiculaire à celui de la figure 4. Cela conduit à donner à la palette une forme rectangulaire. La palette ne peut pas tourner dans la pièce 22b. La tige d'actionneur 24 peut être fixée à la palette par soudure et être guidée par une bague 26 fixée à un prolongement annulaire de la pièce 22b.

Dans le mode de réalisation illustré, la queue 32 de la soupape 25 est distincte de la tige 24 et située coaxialement dans le prolongement de celle-ci. Elle est guidée par une bague 29 fixée à la culasse et peut tourner dans celle-ci.

Deux ressorts de rappel 28a et 28b sont prévus pour maintenir la tête 34 de la soupape 25 au repos dans une position (montrée à la figure 4) sensiblement médiane entre la position de fermeture et la position de pleine ouverture. Un des ressorts 28a est associé à la tige d'actionneur 24 et est comprimé entre un plateau ou coupelle 30 fixé à la tige 24 et le prolongement de la pièce 22b. L'autre ressort 28b est comprimé entre un plateau ou coupelle 31 fixé à la queue de soupape 32 et le fond du puits de soupape 33 ménagé dans la culasse. Le jeu de distribution entre la tige 24 levée et la queue 32 de la soupape 25 fermée garantit l'étanchéité.

La constitution détaillée de l'actionneur 20 et le fonctionnement de l'ensemble du dispositif sont exposés en détail dans les documents FR 2 784 222 et FR 99 05203 précités, auxquels on pourra se reporter.

Pour connaître avec précision la position instantanée exacte de la soupape 25 entre ses positions de fermeture en appui sur son siège et d'ouverture maximale, on associe un capteur magnétique de position conforme à l'invention, tel que décrit plus haut, avec la tige d'entraînement de la soupape 25. Du fait que, dans le mode de réalisation considéré de l'actionneur 20, l'entraînement de la soupape 25 met en jeu, de façon fonctionnellement combinée, la tige d'actionneur 24 et la queue de soupape 32, le capteur de position peut être associé soit avec ladite tige d'actionneur 24, soit avec ladite queue de soupape 32, qui joue alors le rôle de la tige mobile 1 illustrée aux figures 1 et 3.

A la figure 4, sur le même dessin on a schématisé par le contour en trait spectral plein 33 le positionnement du capteur de l'invention associé fonctionnellement à la tige d'actionneur 24, tandis qu'on a schématisé par le contour en tirets 34 le positionnement du capteur de l'invention associé fonctionnellement à la queue de soupape 32.

## Revendications

1. Capteur de position axiale pour une tige (1) déplaçable axialement entre deux positions extrêmes, ledit capteur comprenant un organe aimanté solidaire de la tige et un détecteur de flux magnétique disposé fixe en regard de la trajectoire de l'organe aimanté,
**caractérisé en ce que**
- l'organe aimanté est un manchon (4) en matériau magnétique à aimantation radiale, qui est fixé sur la tige (1) coaxialement à celle-ci,
- la tige (1) est, au moins superficiellement, constituée en matériau magnétique,
- le détecteur de flux magnétique (5) comprend :
• deux bagues (6A, 6B) en matériau ferromagnétique, entourant coaxialement, à distance radiale (e), le manchon aimanté (4) et écartées axialement l'une de l'autre,
• ces deux bagues (6A, 6B) comportant, à leurs extrémités respectives en vis-à-vis, deux saillies radiales (7A, 7B) respectives,
• deux sondes de Hall (8A, 8B) appliquées en vis-à-vis respectivement sur lesdites deux saillies (7A, 7B), et
• des moyens de calcul (9) associés fonctionnellement auxdites sondes de Hall (8A, 8B) et propres à fournir un signal de sortie représentatif du rapport de la différence des flux magnétiques à la somme des flux magnétiques passant par lesdites sondes, lequel rapport est lui-même représentatif de la position axiale de la tige (1) par rapport à une position de repos ; et
- des moyens (18) de retour des flux magnétiques.

2. Capteur de position selon la revendication 1, **caractérisé en ce que** les moyens de calcul (9) comprennent un circuit intégré (10) monté sur une plaquette à circuits imprimés (11) qui chevauche les deux sondes de Hall (8A, 8B).

3. Capteur de position selon la revendication 1, **caractérisé en ce que** les moyens de calcul (9) sont inclus dans un circuit intégré spécifique du type ASIC intégrant également les deux sondes de Hall, ledit circuit intégré spécifique pouvant être en appui directement sur les deux saillies radiales (7A, 7B).

4. Capteur de position selon l'une quelconque des revendications 1 à 3, **caractérisé en ce que** les deux saillies radiales (7A, 7B) respectives des deux bagues (6A, 6B) ont une étendue angulaire restreinte et se présentent sous forme de plots radiaux en vis-à-vis sur lesquels sont disposées respectivement les sondes de Hall (8A, 8B).

5. Capteur de position selon l'une quelconque des revendications 1 à 4, **caractérisé en ce que** les bagues (6A, 6B) sont entourées et supportées par un boîtier cylindrique (12) en matériau amagnétique sensiblement coaxial à la tige et **en ce que** ce boîtier (12) présente une ouverture latérale (13) dans laquelle s'engagent lesdites saillies radiales (7A, 7B) des deux bagues.

6. Capteur de position selon la revendication 5,
**caractérisé en ce qu'**au moins une extrémité (17) du boîtier (13) en matériau amagnétique est conformée pour entourer étroitement la tige (1) et constituer un palier de support de celle-ci à libre coulissement.

7. Capteur de position selon la revendication 5 ou 6, **caractérisé en ce que** les susdits moyens de retour des flux magnétiques comprennent un tube cylindrique (18) en matériau ferromagnétique entourant étroitement ledit boîtier (12), tout en serrant les moyens de calcul (9) sur les sondes de Hall (8A, 8B) et ces dernières respectivement sur les deux saillies (7A, 7B) des bagues (6A, 6B).

8. Capteur de position selon l'une quelconque des revendications 5 à 7, **caractérisé en ce que** la face externe du boîtier cylindrique (12) est creusée d'une gouttière (15) s'étendant à partir de ladite ouverture latérale (13) et **en ce que** des fils électriques de liaison (16) raccordés auxdits moyens de calcul (9) sont abrités dans cette gouttière (15).

9. Capteur de position selon l'une quelconque des revendications 1 à 8, **caractérisé en ce que** la tige (1) est animée d'un mouvement alternatif axial, de part et d'autre d'une position de repos.

10. Actionneur électromagnétique (20) de soupape (25) dans un moteur à combustion interne, cet actionneur ayant une palette (23) en matériau ferromagnétique solidaire d'une tige d'actionneur (24) mobile sensiblement axialement pour coopérer avec une queue de soupape (32) située sensiblement dans son prolongement et coaxialement à celle-ci et qui est mobile sensiblement axialement, des moyens de rappel élastique (28a, 28b) étant associés respectivement à la tige d'actionneur (24) et à la queue de soupape (32) pour maintenir au repos ladite soupape (25) dans une position médiane entre des positions d'ouverture complète et de fermeture,
**caractérisé en ce qu'**il comporte au moins un capteur de position (33 ; 34) selon l'une quelconque des revendications précédentes qui est associé fonctionnellement à l'un des organes déplaçables axialement choisi parmi la tige d'actionneur (24) ou la queue de soupape (32).
